## Europäisches Patentamt
## European Patent Office
## Office européen des brevets

(11) Publication number: **0 073 594**
**B1**

(12) **EUROPEAN PATENT SPECIFICATION**

(45) Date of publication of patent specification: **01.10.86**

(51) Int. Cl.⁴: **F 16 D 13/68**

(21) Application number: **82304320.3**

(22) Date of filing: **17.08.82**

(54) Friction clutch driven plate.

(30) Priority: **29.08.81 GB 8126423**

(43) Date of publication of application:
**09.03.83 Bulletin 83/10**

(45) Publication of the grant of the patent:
**01.10.86 Bulletin 86/40**

(84) Designated Contracting States:
**DE FR IT**

(56) References cited:
**FR-A-2 385 940**
**FR-A-2 395 428**
**GB-A-1 527 915**
**US-A-2 286 502**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Maycock, Ian Commander**
**149 Cubbington Road Lillington**
**Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to friction clutch driven plates particularly though not exclusively intended for use in motor vehicle drive transmissions.

Such driven plates usually have spring centres, allowing limited relative angular movement, to damp out torsional vibrations and provide smooth drive take-up from rest. Multi-stage spring centres are frequently used to provide a particular desired torsion characteristic.

Where compression springs are used to oppose relative angular movement in the driven plate it is important that the springs are neither loose, in which case they rattle, or nipped in which case there is a pre-load to overcome.

Where compression springs are used in series to provide a multi-stage spring centre it is very difficult to ensure smooth transition from one spring to another throughout the range of production tolerances.

US—A—2286502 discloses a friction clutch driven plate having a hub member, a relatively angularly movable friction facing carrier and compression coil springs located in co-operating windows of the hub member and carrier for controlling angular movement therebetween. For each pair of co-operating windows, either the radially inner or radially outer margin of each window may be narrower than the other such that the compression spring is nipped by the narrower margin only. In use of this known driven plate, relative angular movement between the hub member and the friction facing carrier further compresses the spring through the side thereof which is already nipped. It follows that the load which must be applied to produce initial relative movement must be equal to the pre-nip load, resulting in an undesired definite step in the torque/deflection characteristic of the driven plate. This movement also tends to increase the distortion of the spring provided by the pre-nip.

An object of the present invention is to provide a friction clutch driven plate providing a smooth transition in the torque/deflection characteristic as load is applied to a spring without allowing the possibility of the spring to rattle in its window and without a requirement for accurate dimensions of windows and springs. According to the present invention there is provided a clutch driven plate of the kind having a hub member, a relatively angularly movable friction facing carrier and at least one compression spring located in co-operating windows in the hub member and carrier for controlling angular movement therebetween, for one of the hub member window and carrier window one of the radially inner and radially outer margins being narrower than the other such that the spring is nipped by the narrower margin only, characterised thereby that the other of said hub member window and carrier window is arranged to firstly contact an un-nipped end portion of said spring on relative movement between said hub member and carrier.

By this means, as said other window engages the spring, it does so in such a manner that it does not have to overcome the whole of the preload associated with the pre-nip before deflection of the spring can occur.

In this specification the term window is used to refer generally to apertures in the hub member and carrier in which the compression springs are housed. Such windows, especially in the hub member may have an open side and be of irregular shape.

Other features of the invention are included in the following description of a preferred embodiment shown, by way of example only, in the accompanying drawings, in which:—

Fig. 1 is a plan view of a typical clutch driven plate having a multi-stage spring centre;

Fig. 2 is a section through the driven plate of Fig. 1 on the line 'A—A';

Figs. 3a—3e show the effect of the invention in sequential steps;

Fig. 4 shows an embodiment of the invention suitable for a first stage of clamping;

Fig. 5 shows the effect of relative angular movement in a driven plate for a second stage of damping;

Fig. 6 is a part-axial section through a clutch driven plate incorporating the present invention;

Fig. 7 is a graph showing the torsion spring characteristic for a conventional clutch driven plate; and

Fig. 8 is a graph showing the torsion spring characteristic for a driven plate according to the present invention.

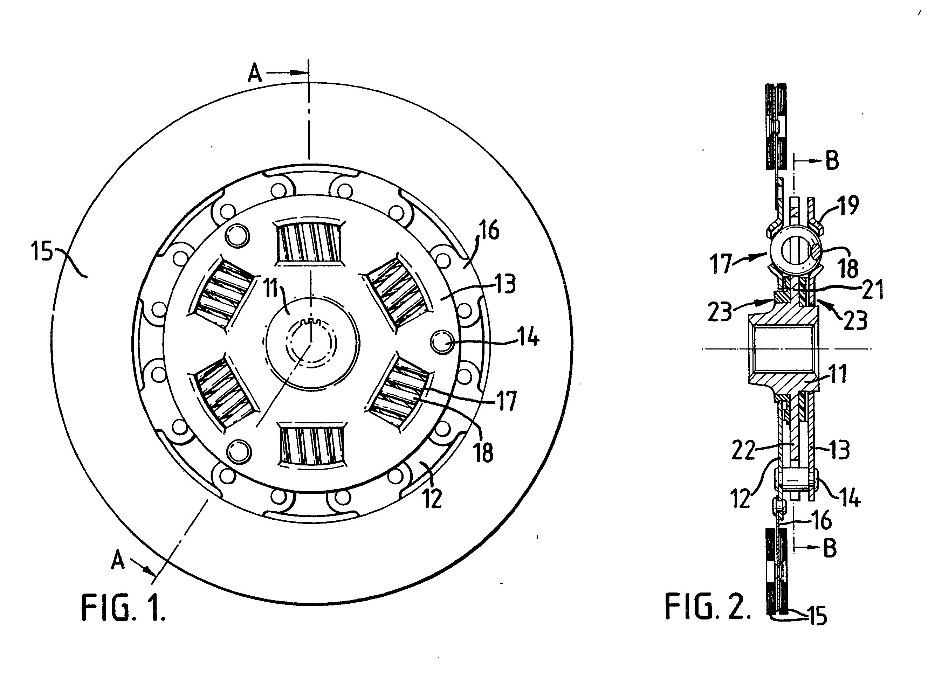

With reference to Figs. 1 and 2 there is shown a typical clutch driven plate having a splined hub member 11 for location on a driven shaft (not shown) and a friction facing carrier comprising side plates 12, 13 held together by rivets 14. Annular friction facings 15 are riveted to cushion segments 16 which are themselves riveted to the side plate 12.

Windows 17 in the side plates 12, 13 house coil springs 18. Shrouds 19, usually slit and raised out of each side plate restrain the springs 18 axially of the driven plate.

The hub member 11 includes a radial flange 21 extending between the side plates 12, 13 and having radial arms 22 extending between the coil springs 18. The typical clutch driven plate may also include a friction washer assembly 23 to give the plate a desired hysteresis characteristic. Rivets 14 also limit relative angular movement between the hub 11 and side plates 12, 13.

In operation, as the friction facings 15 are clamped between the clutch cover and engine flywheel, relative rotation between the side plates 12, 13 and the hub 11 is opposed by the coil springs 18 abutting the radial arms 22. The radial arms may be arranged to contact their respective coil spring sequentially for a multi-stage spring centre and may act both on drive and overrun.

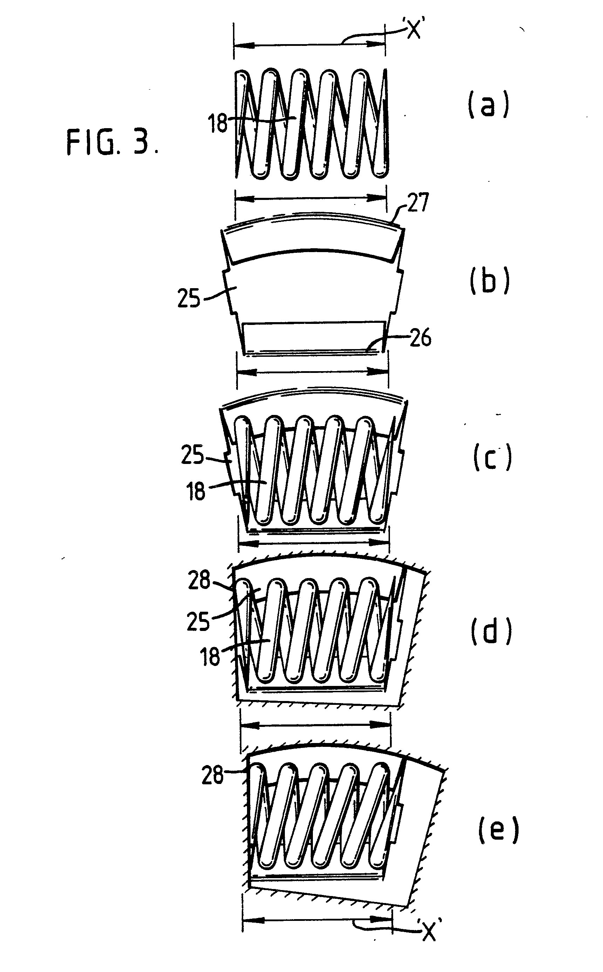

The series of drawings shown in Fig. 3 illustrate the effect of the invention.

Fig. 3a shows the rectangular envelope of a typical compression spring 18 used in conventional clutch driven plates. The free length of the spring is indicated by the dimension 'X' and is continued throughout the series of drawings.

Fig. 3b shows the shape of window 25 adopted to house the typical spring 18 in a side plate for this invention. The window has its radially inner edge 26 shorter than, and its radially outer edge 27 longer than the free length of the spring.

Fig. 3c shows the spring of 3a as installed in the spring window of 3b. The spring 18 is nipped at its radially inner edge and consequently the length of its radially outer edge increases slightly. It is essential that the window 25 provides clearance at the radially outer spring edge.

Fig. 3d shows a radial arm of the hub member window 28 as it is intended to first contact the spring 18 at the unrestrained outer radial edge.

Fig. 3e shows the effect of relative angular movement between the radial arm and the side plate, the radial arm having gradually compressed the spring until the arm bears on the full available end area.

Thus the compression spring is nipped to prevent rattle but the gradual take-up of the spring load by radial arm ensures there is no step preload to be overcome before compression of the spring in the usual manner.

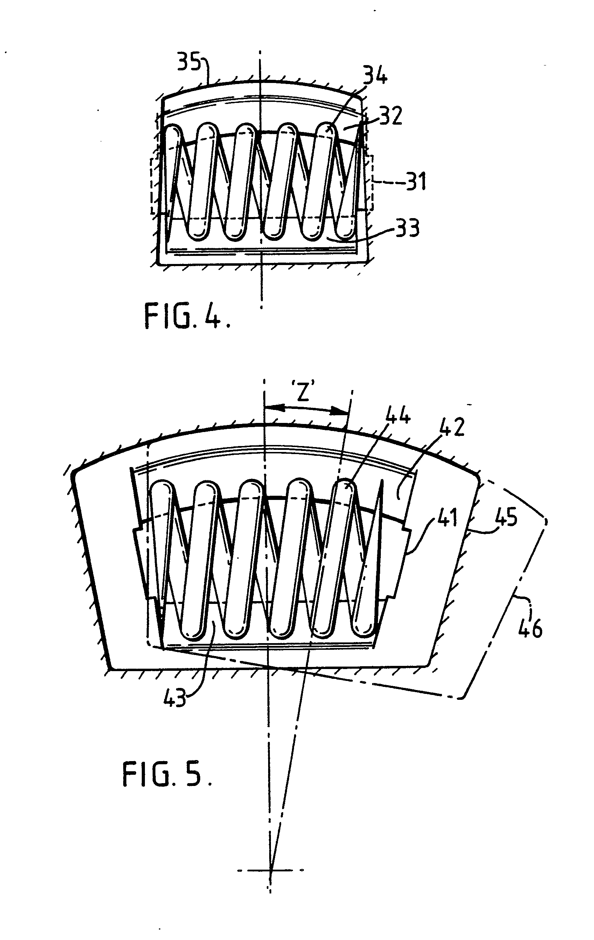

Fig. 4 shows the spring and window arrangement suitable for a first stage of damping. A side plate window 31 has shrouds 32, 33, the radially inner margin of the window being shorter than the radially outer margin. The shroud fold edges are shown as dashed lines. A spring, 34, is nipped at its inner margin to prevent rattle and has a small clearance at the outer margin. A hub window, solid line 35, has a radially outer margin narrower than its inner margin so that relative angular movement between the hub and side plate results in initial compression of the unrestrained radially outer edge of the spring 34 as previously described.

Fig. 5 shows a spring and window arrangement suitable for a second stage of damping.

The side plate window 41 has shrouds 42, 43. The spring, 44, is nipped at its radially inner margin only. The hub window, solid line 45, is well clear of the spring 44 and would in practice be restrained from free relative angular movement by the first stage damping spring.

Relative movement of the hub and side plate through an angle 'Z', against the effect of the first stage damping spring results in initial contact between the hub window, now shown as chaindot line 46, and the radially outer margin of the spring 44. This ensures a smooth transition between the first and second stage damping springs without having loose springs or a step load to overcome.

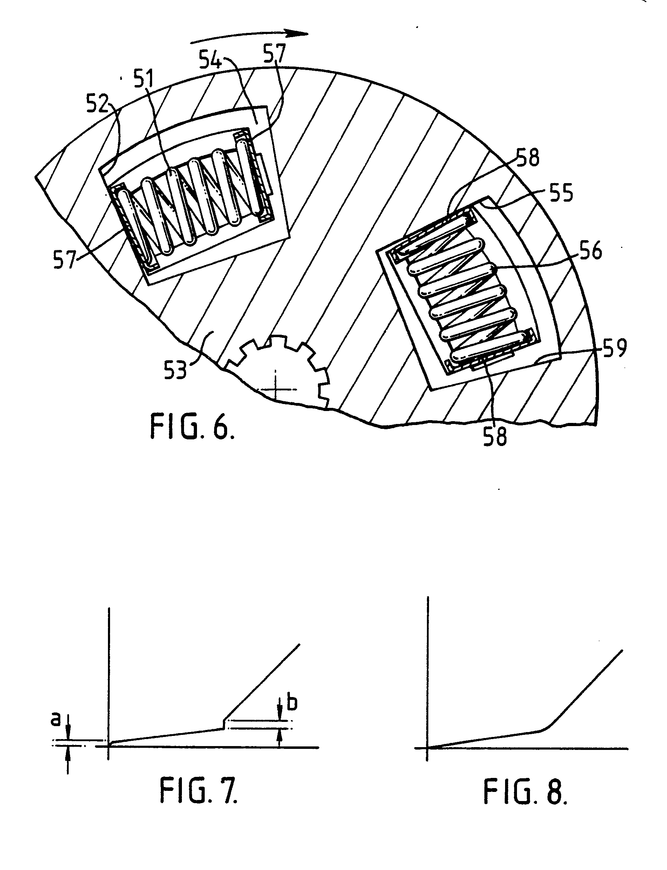

A practical embodiment of the invention is shown in Fig. 6. The spring 51 represents a first stage compression spring under load from a radial window edge 52 of a hub member 53 after a predetermined angular movement between the hub member 53 and the side plate 54. A radial window edge 55 is shown as it comes into contact with second stage damping spring 56. The spring force opposing relative movement consequently increases as the load of the second spring is taken up.

The first stage damping spring 51 is shown as a coil spring having end caps 57. The second stage spring 56 is also shown as a coil spring having end caps 58. The end caps 57, 58 both distribute the loads from the side plate and hub over the full spring end area and allow any orientation of the spring on assembly into the driven plate.

Fig. 7 is a graph of spring force opposing such relative movement against degrees of relative movement for a driven plate of prior art construction and having the torsion spring nipped against rattle. A step 'a', due to the slight spring pre-load, is apparent for the first spring stage and a second step 'b' apparent between the first and second spring stages.

Fig. 8 is a graph showing the effect on a driven plate modified in accordance with the invention. The initial drive take up and transition between the first and second stage damping springs is a smooth curve rather than the sharp step change given by the conventional construction.

Design parameters may dictate that the spring is alternatively nipped at its radially outer edge and has a free inner edge and that the invention is effective for both drive and overrun. For example the radial window edge 59 of Fig. 6 would contact the torsion spring 56 on overrun.

Other types of spring, for example cylindrical rubber springs, could be used instead of coil springs in the driven plate.

**Claims**

1. A clutch driven plate having a hub member (11), a relatively angularly movable friction facing carrier (12, 13) and at least one compression spring (18) located in co-operating windows of the hub member and carrier for controlling angular movement therebetween, for one of the hub member window and carrier window (25, 28) one of the radially inner and radially outer margins having narrower than the other such that the spring (18) is nipped by the narrower margin only, characterised thereby that the other of said hub member window and carrier window (25, 28) is arranged to firstly contact an un-nipped end portion of said spring (18) on relative movement between said hub member (11) and carrier (12, 13).

2. A clutch driven plate according to Claim 1, characterised thereby that the spring (18) is nipped by a narrower margin (26) of said carrier window (25).

3. A clutch driven plate according to Claim 1 or Claim 2, characterised thereby that the radially inner margin is said narrower margin (26).

4. A clutch driven plate according to any one of the preceding claims characterised thereby that the other of said hub member window and carrier window (25, 28) is arranged to contact an un-nipped end portion of the spring (18) on a relative angular movement between said hub member (11) and carrier (12, 13) in both directions.

5. A clutch driven plate according to any one of the preceding claims characterised thereby that the spring is a coil spring.

## Revendications

1. Plateau mené d'embrayage ayant un moyeu (11), un châssis porteur à garniture de friction (12, 13) mobile angulairement relativement au moyeu (11), et au moins un ressort de compression (18) situé dans des fenêtres coopérantes du moyeu et du châssis porteur pour commander le mouvement angulaire entre eux, pour l'une des fenêtres du moyeu et du châssis porteur (25, 28) l'un des bords radialement intérieur et extérieur étant plus étroit que l'autre, de telle sorte que le ressort (18) est pincé seulement par le bord le plus étroit, caractérisé en ce que l'autre fenêtre de moyeu et de châssis porteur (25, 28) est agencée pour entrer d'abord en contact avec une partie d'extrémité non pincée dudit ressort (18) lors d'un mouvement relatif entre le moyeu (11) et le châssis porteur (12, 13).

2. Plateau mené d'embrayage selon la revendication 1, caractérisé en ce que le ressort (18) est pincé par un bord plus étroit (26) de ladite fenêtre (25) du châssis porteur.

3. Plateau mené d'embrayage selon la revendication 1 ou 2, caractérisé en ce que le bord radialement intérieur est ledit bord le plus étroit (26).

4. Plateau mené d'embrayage selon l'une quelconque des revendications précédentes, caractérisé en ce que l'autre fenêtre desdites fenêtres de moyeu et de châssis porteur (25, 28) est agencée pour entrer en contact avec une partie d'extrémité non pincée du ressort hélicoïdal (18) lors d'un mouvement angulaire relatif entre ledit moyeu (11) et le châssis porteur (12, 13) dans les deux directions.

5. Plateau mené d'embrayage selon l'une quelconque des revendications précédentes, caractérisé en ce que le ressort est un ressort hélicoïdal.

## Patentansprüche

1. Angetriebene Kupplungsscheibe mit einem Nabenteil (11), einem relativ dazu winkelig bewegbaren Reibungsbelagträger (12, 13) und mindestens einer Druckfeder (18), die in zusammenwirkenden Fenstern des Nabenteiles und des Trägers zur Steuerung der Winkelbewegung dazwischen für eines der Fenster, d.h. Nabenteilfenster oder Trägerfenster (25, 28) angeordnet ist, wobei entweder der radial innere oder der radial äußere Rand schmäler als der jeweils andere ist, derart, daß die Feder (18) nur von dem schmäleren eingeklemmt wird, dadurch gekennzeichnet, daß das andere der Fenster, d.h. Nabenteilfenster oder Trägerfenster (25, 28), so ausgebildet ist, daß es zuerst einen nicht eingeklemmten Endabschnitt der Feder (18) bei einer Relativbewegung zwischen dem Nabenteil (11) und dem Träger (12, 13) berührt.

2. Angetriebene Kupplungsscheibe nach Anspruch 1, dadurch gekennzeichnet, daß die Feder (18) von einem schmäleren Rand (26) des Trägerfensters (25) eingeklemmt wird.

3. Angetriebene Kupplungsscheibe nach Anspruch 1 oder Anspruch 2, dadurch gekennzeichnet, daß der radial innere Rand der schmälere Rand (26) ist.

4. Angetriebene Kupplungsscheibe nach irgendeinem der vorhergehenden Ansprüche, dadurch gekennzeichnet, daß das andere Fenster, d.h. Nabenteilfenster oder Trägerfenster (25, 28), so ausgebildet ist, daß es einen nicht eingeklemmten Endabschnitt der Feder (18) bei einer relativen Winkelbewegung zwischen dem Nabenteil (11) und dem Träger (12, 13) in beiden Richtungen berührt.

5. Angetriebene Kupplungsscheibe nach irgendeinem der vorhergehenden Ansprüche, dadurch gekennzeichnet, daß die Feder eine Schraubenfeder ist.

FIG. 1.

FIG. 2.

0 073 594

FIG. 3.

(a)

(b)

(c)

(d)

(e)

FIG. 4.

FIG. 5.

FIG. 6.

FIG. 7.

FIG. 8.